# EUROPEAN PATENT APPLICATION

(11) **EP 1 255 316 A2**
(43) Date of publication of application: **06.11.2002**
(21) Application number: 02291024.4
(22) Date of filing: 23.04.2002
(51) Int. Cl.: H01M 8/02

(54) **Electrochemical fuel cell with polymer electrolyte**

(30) Priority: 24.04.2001 WO PCT/EP01/04671
(71) Applicant: Nitech S.A., 42400 Saint-Chamond (FR)
(72) Inventor: Croset, Michel, 91120 Palaiseau (FR)
(74) Representative: Leszczynski, André

(57) **Abstract**

In a fuel cell for generating electrical energy at least one electrically conductive gas distributor is a reticulated three dimensional structure, comprising a ductile basic skeleton (46) of a first metal or metal alloy used under compression in its elastic domain and a conductive top layer (42) of a corrosion resistant metal or alloy.

Such a structure is ductile and elastic due to the nature of the skeleton (46) that it easily can be made into a cell compartment by compression. At the same time the top layer (42) provides corrosion resistance thereby extending the lifetime of the cell.

## Description

The present invention relates to an electrochemical cell, comprising a housing having an inlet for feeding reactants and an outlet for discharging products, and disposed within said housing end plates, means for distribution of reactants, and means for collection of electrical current, gas diffusion electrodes and an ion―exchange membrane.

Such an electrochemical cell is known in the art, e.g. from USA―6,022,634. Electrochemical cells of this type ― also known as fuel cells ― are devices wherein a fuel such as hydrogen, methanol or a mixture of fuels is combusted by a suitable oxidant, for example pure oxygen. However, the free energy of the reaction occurring is not completely converted into thermal energy, but also into electrical energy in the form of a continuous current. Fuel cells of this type have gained a lot of interest because of the theoretical high efficiency and low environmental pollution, since no emission of environmental harmful substances and no generation of noise occurs.

One of the major concerns in the design of a fuel cell is the triple contact point between electrolyte, i.e. the ion―exchange membrane, the electrode and the fluid reactants. In the examples of the fuel cell according to USA―6,022,634 the gas diffusion electrodes are made of a thin film or cloth, which comprise inter alia a Pt catalyst supported on carbon. Furthermore the current collectors and the electrically conductive distributors for the gaseous reactants flow being, or not, separate components are made from foam of a nickel chromium alloy (50:50), which, in the case of a separate current collector, can be collapsed.

Although such a foam material offers the required corrosion resistance which is necessary in view of the elevated operating temperatures (>100 °C) and other conditions, e.g. stand still at room temperature, it has appeared that the foam is insufficiently ductile to be used as gas distributors into the gas compartments of the fuel cell by compression between end plates without degradation of the fuel cell, in particular of the ion―exchange membrane. Such a compression is necessary in order to provide an intimate contact between electrode and membrane and between gas distributors and end plates. However there is a considerable risk of the occurrence of short circuits as a result of penetrating of the electrodes and/or of the current collectors and/or of the gas distributors through the membrane. Also cracks may be formed which deteriorate the performance of the distributors and collectors.

An object of the invention is to provide in general fuel cell components, and in particular distributors of gaseous reactants which offer sufficient ductility, elasticity, electrical conductivity and adequate corrosion resistance to provide:
- low interfacial electrical resistance thanks to elastic compression
- good electrical conductance between gas diffusion electrode and bipolar plate, with no long term degradation
- good and uniform distribution of gaseous reactants
- good resistance against corrosion.

According to the invention this is achieved by at least one of the gas distributors being a reticulated porous three dimensional structure, which comprises a ductile basic skeleton of a first metal or alloy used under compression in its elastic domain, and a conductive top layer of a corrosion resistant metal or alloy, its oxide being also electrically conductive. Due to the required conductive nature of basic skeleton and of the top layer such an porous structure is highly conductive, thus enabling transportation of the generated electrical current. It is also porous and permeable for the reactants and products. The ductile and elastic basic skeleton allows the gas distributor to support its compression in a compartment of the fuel cell with no degradation of its porous structure, while the top layer of a corrosion resistant material protects the first base metal or alloy against corrosion without seriously affecting its ductility and elasticity. The relatively thin top layer is continuous and correctly adherent to the first metal or alloy.

In view of permeability the reticulated three dimensional structure advantageously has a porosity of at least 80%.

In a fuel cell designed according to the concept of USA 6,022,634, wherein the reactant distribution means and current collection means are separate components, these two components can advantageously be made of a three dimensional structure as described above.

Preferably the basic skeleton is made from nickel. The production of nickel foam is known per se. Nickel has an adequate ductility for the purposes of this invention, allowing its deformation under compression without degradation of the structure such as broken struts or cracks. Its elastic domain under compression depends on its porosity and on its specific weight which have to be adjusted in order to react to the compressive pressure and to the compression factor by elastic deformation with negligible plastic deformation. The struts of the basic skeleton preferably have a thickness in the range of 50―250 micrometers. This range allows for an adequate ductility, porosity and permeability. The struts which are hollow may have a wall thickness of several tens of micrometers, e g 20 micrometers.

Advantageously chromium is used as protective metal.

However, other metals or alloys may be satisfactory provided that their oxide is conductive and that their mechanical properties (especially expansion coefficient) are not too different to those of the underlying basic skeleton.

Nickel/chromium alloys with a Cr content high enough to be protective against corrosion proved to be efficient protective layers. In that case, the needed chromium content, which depends on the agressivity of the gaseous reactants can be as low as 20% (e g inconel type), or up to 50%.

Chromium, Inconel and other Cr/Ni based alloys are chemically resistant against corrosion or corrosive oxidation.

If deposited by PVD techniques such as sputtering, they adhere well to nickel.

In order to avoid the risk of cracks causing corrosion of the underlying basic skeleton, the thickness of the top layer is preferably at least 0.2 micrometer, and more preferably in the range of 1-3, most preferably about 1 micrometer in view of both corrosion resistance, ductility and elasticity.

Such protective layers can also be deposited by other techniques than PVD, such as electroplating ( Cr, Cr doped, Ni/Cr, Sn Pb...) or by CVD.

Nickel/Chromium alloys can also be created in the near surface region of the basic porous skeleton by high temperature diffusion of Cr or of Cr/Al (chromisation technique).

According to a preferred embodiment, prior to compression the thickness of the reticulated material is within the range of 1―2,5 millimeter; its specific weight is between 300g/sqm and 900g/sqm and its porosity is above 80%, typically 95%. Such a structure allows a ductile and quasi elastic compression up to 30% of its original thickness.

Although various techniques are known in order to manufacture a metallised foam, a preferred process for obtaining the metal foam structure of the invention comprises pre-metallising a polymeric porous support by cathode sputtering, in particular of nickel, in vacuum, wherein the support has a plurality of pores substantially in communication with each other.

Such a pre-metallising process per se is described in US―A―4,882,232.

Other techniques such as electroless plating or C deposit can also be applied. As porous support a fully reticulated polyurethane foam is preferred. After pre-metallisation the thin sputtered deposit is allowed to thicken by a conventional nickel electroplating method until the appropriate thickness, frequently a strut wall thickness of about 20 micrometers, is reached. The skeleton thus obtained is subjected to a thermal treatment in order to allow pyrolysis of the polymeric support, followed by an annealing step at high temperature, if necessary.

Thereafter a thin three dimensional deposit of a corrosion resistant metal, or alloy, preferably chromium based, is deposited or created by diffusion.

In the case of deposition ( PVD or CVD techniques ),Sputtering is preferred in view of penetration into the pore structure and in view of relative uniform thickness of the deposit compared to other techniques such as electroplating. It also offers a good adhesion of the deposited layer onto the basic porous skeleton. This sputtering process can be batch-wise or continuous. In the batch process the metallised foam sheets being the basic skeleton are placed in front of sputtering targets made of the corrosion resistant composition. The distance between targets and sheets is e.g. approximately 5 cm. The pressure in. the sputtering chamber should be high enough to allow penetration deep into the pores of the foam. In order to obtain a continuous deposit in terms of coverage a sheet is passed along the targets or the other way around. Both faces of a sheet can be sputtered simultaneously or successively depending on the arrangement of the targets with respect to the sheet to be sputtered. For example, if sheets are placed onto a rotating mandrel facing the targets, the sheets are turned inside out after one or more passes along the targets in order to obtain a continuous deposit on both faces and into the pores.

In the continuous process a metallised foam web is uncoiled and both faces thereof are positioned in front of suitable sputtering targets. After sputtering the web is recoiled onto a cylinder or the like having a diameter sufficiently large to avoid the generation of cracks in the deposit of corrosion resistant layer.

In the case of the creation of an alloy at the surface of the porous skeleton by high temperature diffusion of Chromium for example, the temperature can be in the range of 900 °C and the duration of the treatment of the order of a fraction of one hour to obtain a surface Ni/Cr alloy layer of 1 micron.

The fuel cell according to the invention can be a common PEMC(Proton Exchange Membrane Cell) or DMFC (Direct Methanol Fuel Cell), which is fed with oxygen or air on one side of the membrane, and hydrogen or hydrogen compound like methanol on the other side of the membrane. The fluids are uniformly distributed at the surface of the membrane by the gas diffusion electrodes and by the current collectors and the gas diffusers protected against corrosion or corrosive oxidation according to the invention.

Upon reaction an electric current is generated, which is transported by the electrodes collected by current collectors if existing and transported to the end plates by the conductive porous gas distributors.

In the fuel cell according to the invention the means for distributing reactants and the means for collecting current generated can be a single sheet performing both functions, or it can consist of two separate elements similar to patent USA―6,022,634.

The working temperature of such fuel cells is usually less than 200 °C.

However, this temperature limitation is imposed by the proton exchange membrane which shows considerable degradation at higher temperatures. The foam structure of the invention itself is capable of resisting much higher temperatures. Corrosion is accelerated by the higher operating temperature taking also into account the composition of the reactants. As a general rule of thumb one can say that the lower the temperature and the purer the reactants, the higher the lifetime of the cell.

The invention relates also to a stack of electrochemical cells connected in series comprising at least one cell according to the invention as previously described, as well as a gas diffusion electrode.

The invention is illustrated in more detail by reference to the attached drawing, wherein:
- Fig. 1 shows a simplified. embodiment of an electrochemical cell according to the invention;
- Fig. 2 is an electron microscope photograph (magnification 39X) of a gas distributor, made from nickel foam covered by chromium; and
- Fig. 3 is an electron microscope photograph (magnification 1250X) showing a detail of the foam of Fig. 2.

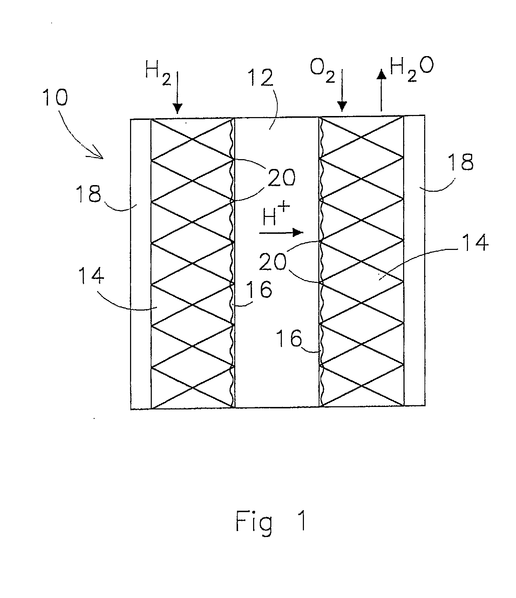

In Fig. 1 an embodiment of a fuel cell is schematically represented. The fuel cell is designated by reference numeral 10. The fuel cell 10 comprises a housing (not shown). In the housing a ion― exchange membrane 12 is disposed in intimate contact between two gas distributors 14 (distributors for the gas reactants) according to the invention. Both sides of the flat membrane 12 are coated with the gas diffusion electrode layer 16 made of a thin film or cloth which comprises a catalyst paste, for example Pt/C in a suitable polymeric carrier. In-between the diffusion electrode 16 and the gas distributor 14 may exist a current collector which creates the electrical link between these two layers (not representes in Fig 1). Adjacent to the distributors 14 are means for collection of electrical current, namely end plates 18 (named bipolar plates in the case of a stack of several individual cells) made from aluminium plates in the case of the USA patent 6,022,634, which are connected to an external circuit.

To one of the distributors 14 hydrogen is fed via an inlet provided in the housing. To the other distributor oxygen is fed via an inlet in the housing.

Hydrogen and oxygen (or air) are distributed in the respective gas distributors 14 due to the porous and permeable nature thereof. At the triple contact points 20 hydrogen is reacted into hydrogen ions, which are transported through the ion―exchange membrane 12 to the other side thereof. The electrons generated are transported by the electrode, the current collector (if existing) and by the gas distributor towards the respective end plates 18. The oxygen fed in, the hydrogen ions transferred by the membrane 12 and electrons transported by the respective layers 18 and 14 react and form water, which is discharged from the cell via a suitable product discharge in the housing.

For sake of convenience the reactions occurring at the electrodes, as well as the feed of reactants and discharge of product water have not been represented schematically in this figure.

The gas distributors 14 are each made of a nickel foam having a total thickness of 1.2 mm after compression, which is uniformly covered with a chromium top layer of 1 micrometer. Usually the amount of compression of each of the gas distributors 14 is limited to the value just enough to create good electrical contacts on both sides. In the example described here it corresponds to a compression from1.4mm, initial thickness, down to 1.2mm. The elastic behaviour of the layer 14 maintains this compressive force constant in time, ensuring the permanence of the good electrical contact.

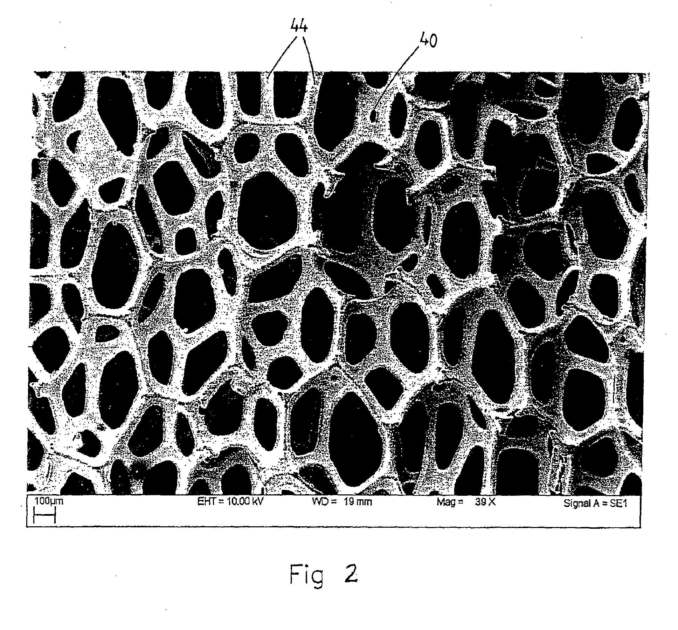

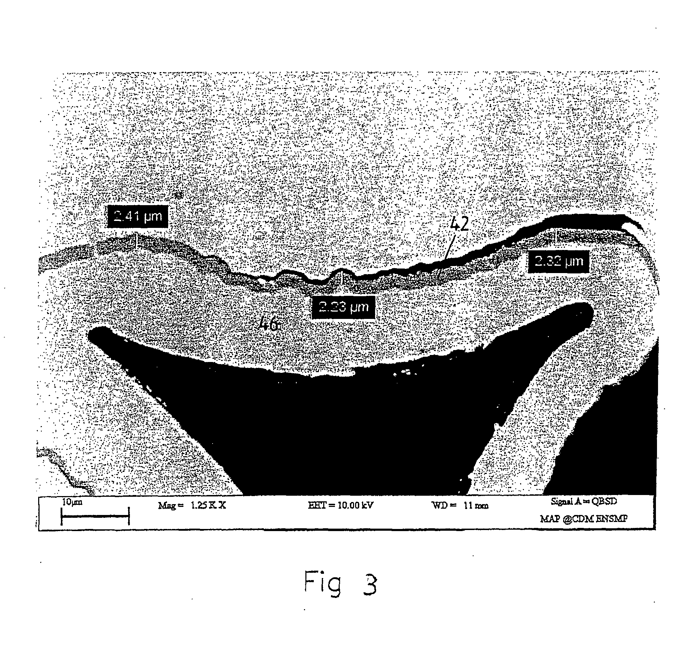

Fig. 2 shows the open pore structure at the surface of a nickel foam sheet 40, which is protected against corrosion by chromium. From the detailed photograph of Fig. 3 it appears that the continuous chromium top layer 42 covers completely the struts 44 of the basic skeleton 46 made from nickel. At several points the thickness values (in micrometer) of the top layer 42 are presented, which evidence the continuous chromium deposit.

## Claims

1. Electrochemical cell comprising a housing having an inlet for feeding reactants and an outlet for discharging products, and disposed within said housing end plates, means for distribution of reactants, and means for collection of electrical current, gas diffusion electrodes and an ion-exchange membrane, wherein at least one of the distributors for the gas reactants is a reticulated porous three dimensional structure, comprising a ductile basic skeleton of a first metal or alloy used under compression in its elastic domain and a conductive top layer of a corrosion resistant metal or alloy.

2. Electrochemical cell according to claim 1, wherein the reticulated three dimensional structure has a porosity off at least 80%.

3. Electrochemical cell according to claim 1, wherein the means for collection of electrical current is a reticulated porous three dimensional structure, comprising a ductile basic skeleton of a first metal or alloy used under compression in its elastic domain and a conductive top layer of a corrosion resistant metal or alloy.

4. Electrochemical cell according to claim 1, wherein the corrosion resistant conductive layer comprises chromium or chromium based alloys.

5. Electrochemical cell according to claim 1, wherein the corrosion resistant conductive layer is stainless steel.

6. Electrochemical cell according to claim 1, wherein the first metal is nickel.

7. Electrochemical cell according to claim 1, wherein the thickness of the top layer is at least 0.2 micrometer.

8. Electrochemical cell according to claim 6, wherein the thickness of the top layer is within the range of 1-3 micrometer.

9. Electrochemical cell according to claim 1, wherein the thickness of the struts of the basic skeleton is within the range of 50―250 micrometer.

10. Electrochemical cell according to claim 1, wherein the thickness of the reticulated material is within the range of 1―2.5 millimeter, prior to calandering.

11. Electrochemical cell according to claim 1, wherein the basic skeleton of the first metal is made by a pre metallising process comprising cathode sputtering of a polymeric porous support having a plurality of pores substantially in communication with each other with said first metal under vacuum.

12. Electrochemical cell according to claim 1, wherein the corrosion resistant and conductive protective layer is made at the surface of the basic porous skeleton by PVD, CVD or electroplating.

13. Electrochemical cell according to claim 1, wherein the corrosion resistant and conductive protective layer is created in the near surface region of the basic porous skeleton by thermal diffusion of chromium or of chromium compound such as Cr/Al.

14. A stack of electrochemical cells connected in electrical series wherein at least one of the cells is a cell according to claim 1.
